# EUROPEAN PATENT APPLICATION

(11) **EP 4 607 388 A1**
(43) Date of publication of application: **27.08.2025**
(21) Application number: 24159740.0
(22) Date of filing: 26.02.2024
(51) Int. Cl.: G06F 21/57, G06F 21/64

(54) **A METHOD FOR VERIFYING A CORRECT APPLICATION OF A CHANGESET**

(71) Applicant: ABB SCHWEIZ AG, 5400 Baden (CH)
(72) Inventor: KOHNHAEUSER, Florian, 64560 Riedstadt (DE); FINSTER, Soeren, 76139 Karlsruhe (DE); JARVINEN, Pekka, 11341 Stockholm (SE); LOPONEN, Tapio, 13720 Parola (FI); DAWOUD, Abdallah, 66121 Saarbrücken (DE)
(74) Representative: Maiwald GmbH

(57) **Abstract**

The invention relates to a method for ensuring a correct application of a changeset (10) that is configured for being applied to an industrial device (20). The method comprises the steps of:
signing and encrypting, by a central server (30), the changeset (10);
transmitting, by the central server (30), the encrypted changeset (10) to the industrial device (20);
decrypting, by the industrial device (20), the encrypted changeset (10);
applying, by the industrial device (20), the changeset (10) to the industrial device (20);
logging, by the industrial device (20), the decrypting and the applying of the changeset (10) as an event log (14);
querying, by the central server (30), the event log (14);
retrieving and encrypting, by the industrial device (20), the event log (14);
transmitting, by the industrial device (20), the encrypted event log (16) to the central server (30); and
verifying, by the central server (30), the encrypted event log (14).

## Description

### Field of the Invention

The invention relates to the field of field devices, of configuration management, and/or of security, particularly to a method for correctly applying a changeset to a field device. The invention further relates to a computer program product, to a computer-readable storage medium, to a computing device, and to a use.

### Background

Applying a changeset to a field device is done in many variations, for instance for adding features, for applying bug-fixes or security improvements, for adaptation to hardware improvements, and/or for other purposes. However, it may not always be clear, for example, what changeset(s) have been applied to a selected field device and/or if the changeset(s) have been applied correctly.

### Description

It is an objective of the disclosure to provide a method for verifying and/or supporting a correct application of a changeset. This objective is achieved by the subject-matter of the independent claims. Further embodiments are evident from the dependent claims and the following description.

One aspect relates to a method for ensuring a correct application of a changeset that is configured for being applied to an industrial device, the method comprising the steps of:
signing and encrypting, by a central server, the changeset;
transmitting, by the central server, the encrypted changeset to the industrial device; decrypting, by the industrial device, the changeset;
applying, by the industrial device, the changeset to the industrial device;
logging, by the industrial device, the decrypting and the applying of the changeset as an event log;
querying, by the central server, the event log;
retrieving and encrypting, by the industrial device, the event log;
transmitting, by the industrial device, the encrypted event log to the central server; and verifying, by the central server, the encrypted event log.

An industrial device is a device that is configured for supporting an industrial process, e.g., in chemical and process engineering. The industrial process may be configured for producing and/or for manufacturing substances, for instance materials and/or compounds. The industrial process may be run in an industrial plant. The industrial device may, for instance, be a sensor, an actuator, and/or a control unit. Examples for sensors may comprise inductive, capacitive, resistive, and/or optical means or units, configured, e.g., for sensing pressure, flow, temperature, distance, and/or variations of these measures, e.g. speed, acceleration, etc. Examples for actuators may comprise (motor) drives, pumps, compressors, vessels or pressure vessels, tanks, furnaces, heat exchangers, fans, cooling towers, valves, etc. Examples for control units may comprise one or more Programmable Logic Controllers, PLCs.

A changeset is a file or any piece of software that is configured for modifying an existing software on a device, particularly on the industrial device. The changeset may comprise data packages that are configured for modifying a current configuration, function and/or state of an industrial device. At least some example of a changeset may also be called "software patch" or "configuration file". Using changesets, the behavior and performance of industrial devices can be adapted. The changeset for an industrial motor drive may, for instance, include updates to parameters such as acceleration time, deceleration time, maximum speed, fault detection, and overload protection threshold. The changeset may be signed, e.g. in a cloud, immediately after having been generated. The authenticity of the changeset may be verified at the last possible stage, e.g., at the drive control unit, by verifying the signature of the changeset, e.g. against existing and/or pre-deployed keys.

To ensure the correct application of the changeset - or, at least, to support the correct application and/or the ensuring of it - may comprise to check, on a reliable basis, what modifications have been applied to the device's software. This may, furthermore, comprise being able to check an integrity of a changeset.

The method may comprise two phase, wherein a first phase comprises applying the changeset to the industrial device and a second phase comprises verifying a correctness at least of the applying phase. The first phase may further comprise to check a confidentiality of the transmitted changeset. The second phase may further comprise a secure and verifiable logging of the applied changeset, and/or steps for checking, verifying and/or ensuring this.

The changeset may be signed and encrypted by the central server and, then, the encrypted changeset to the industrial device may be transmitted to the industrial device. The transmitting - and/or any further communication - may be performed by wireless or wired communication means; examples may comprise an Ethernet connection, and/or any kind of a secured connection. After having received the encrypted changeset, the industrial device may decrypt and/or verify the changeset. This may comprise a check that the changeset has not been tampered during the transmitting. Afterwards, the device - respectively: a software part in the device that is configured for performing this step - applies the changeset to the industrial device and then logs the decrypting and the applying of the changeset as an event log. The event log may be implemented as one file, which stores each logging step by appending it to the event log, or as a plurality of files, where each file comprises one or more logging step(s). The first phase advantageously creates an immutable log of changesets on the device, protected from unauthorized access and tampering. In this way, any (subsequent) changeset from the changeset provider, e.g., ABB cloud, is securely transmitted, applied, and logged - in the event log - on the changeset consumer, i.e., on the target industrial device. Further data and/or events may be logged as well.

In the second phase, the central server queries the event log. After having received the query, the industrial device encrypts the event log and transmits the encrypted event log to the central server. The central server may be the same as the changeset provider. The central server verifies and decrypts the encrypted event log, thus ensuring that the event log has not been tampered during transmitting nor having been compromised in the industrial device itself.

The method is suitable for verifying the correct application of a changeset to an industrial device and, moreover, the correctness of the changeset itself and its correct transmitting to the industrial device. This may be essential to maintain an operational reliability and to preserve an integrity of an industrial device.

In various embodiments, the encrypted event log is stored in a Trusted Execution Environment, TEE, and/or a Trusted Platform Module, TPM, of the industrial device, so that the encrypted event log is protected by secure hardware. Furthermore, The TEE may be a basis for at least some steps of the method described above and/or below.

Based on TEE and/or TPM, the first phase may be performed by verifying an integrity of the changeset consumer, i.e., the target industrial device. To this end, a security technique called remote attestation may be applied. Via remote attestation, the integrity of the TEE running on the industrial device may be verified. The TEE may be configured for protecting following main components: (i) the software receiving, applying, and logging the changeset, (ii) the event log of the received and applied changeset, and (iii) keys to decrypt changesets and encrypt the changeset's event log, i.e. the decryption key(s). After the integrity of the TEE has been ensured by the changeset provider, the changeset is signed, encrypted, and sent to the device. Inside the TEE, the changeset software may decrypt and verify the changeset using the TEE-protected changesets keys, which ensures that the changeset has not been tampered during transmission. Afterwards, the respective part of the device's software may apply the changeset to the device and then logs, as the event log or in the event log, the application of the changeset in the TEE-protected database. This creates an immutable log of changesets on the device itself, protected from unauthorized access and tampering. In this way, any (subsequent) changeset from the changeset provider, e.g., ABB cloud, is securely transmitted, applied, and logged on the changeset consumer, i.e., the target industrial device.

Based on TEE and/or TPM, the second phase may be invoked by the changeset provider at any time to retrieve and verify the event log of interest. To this end, the integrity of the TEE may again be verified by the central server - which may be the changeset provider - and, after a successful verification, the industrial device is queried for its event log. The event log (e.g., for a specific time frame) may be retrieved from the TEE-protected database, signed, and encrypted by the TEE-protected keys, and then sent to the central server. The central server may, then, verify and decrypt the event log with the public counterpart of the TEE-protected private keys, which ensures that the logs have neither been tampered in transit nor on the device itself.

In various embodiments, the changeset comprises data and/or instructions for modifying a behaviour and/or a performance of the industrial device. The changeset may be a piece of (compiled) software, which is integrated into the device's software by so-called "patching techniques", and/or it may be a script that is run by a specialized and/or a commonly available execution environment or interpreter - e.g. Python, Perl, PowerShell, Bourne Shell, Bash, etc. - of the industrial device. An example of a changeset that may be run on the commonly available "Bash" may look like this:

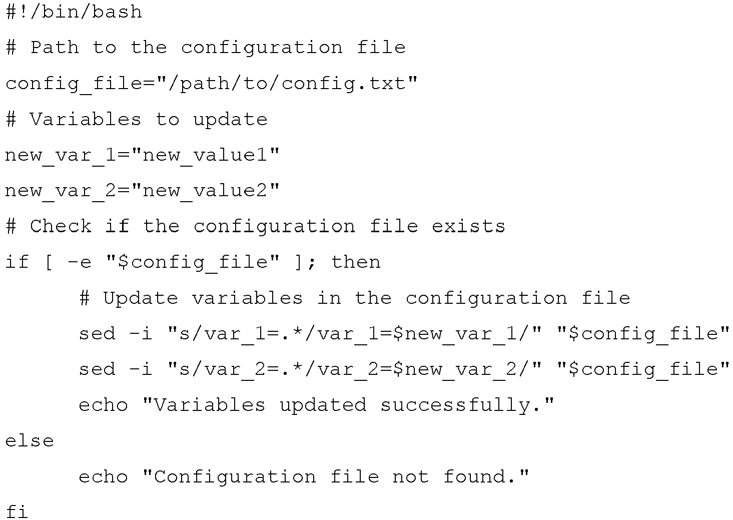

In the example shown, some controlling variables are replaced by new ones.

In various embodiments, the applying the changeset and/or the logging as the event log is verifyable by a remote attestation method. For performing the remote attestation method, a method similar to the one described in one of the following articles may be used: Kovah, X.; et al: New Results for Timing-Based Attestation. 2012 IEEE Symposium on Security and Privacy, San Francisco, CA, USA, 2012, pp. 239-253; or: Schulz, St., et al.: Boot attestation: Secure remote reporting with off-the-shelf IoT sensors. Computer Security-ESORICS 2017, 22nd European Symposium on Research in Computer Security, Oslo, Norway, September 11-15, 2017. The attestation method, on the one hand, fits very well to the method as described above and/or below, and, on the other hand, it may contribute to a consistent and highly secure procedure of software updating, particularly in an industrial device.

In various embodiments, the method further comprises the step of verifying an authenticity and/or an integrity of the industrial device. This verifying may be performed right before the first and/or second phase. This step may contribute to a seamless seucurity concept of running and updating particularly an industrial device.

In various embodiments, the event log comprises at least one of: a timestamp, a sequence number, a type of the industrial device, a version of the industrial device, a source of the changeset, a destination of the changeset, an action. One exemplary entry of the event log may look like this:

```
2024-02-09, 14:08:11.099123; #1234; patch; v1.0; ABB cloud
       provider; ABB field device 567; installed, exit code 0
```

The event log may be implemented as one file, which stores each logging step by appending it to the event log, or as a plurality of files, where each file comprises one or more logging step(s).

In various embodiments, the method further comprises a changeset audit file, wherein the changeset audit file comprises at least one of: an event log sequence number begin, an event log sequence number end, a cryptographic algorithm, a cryptographic value. One exemplary entry of the changeset audit file may look like this:

```
        #1234; #2345; sha256;
        c3a4bf6724ab963d7422df31e6f5859277c5bla6f51ccld98b29d7687c46463b
```

The changeset audit file may be a kind of pointer to a subset of a plurality of files of the event log. The changeset audit file may be generated as a reaction on querying the event log by the central server. This may advantageous support a concept of using a plurality of files for the event log, where each file comprises one or more logging step(s). This may contribute to reducing the amount of event logs that are stored in the industrial device, thus advantageously reducing the memory required for the event log.

An aspect relates to a computer program product comprising instructions, which, when is executed by a computer, cause the computer and/or controller to carry out the method described above and/or below. The computer may be one or more computing units, for instance one computing unit that implements the central server and one computing unit that implements the industrial device.

An aspect relates to a computer-readable storage medium where a computer program or a computer program product as described above is stored on.

An aspect relates to a computing device configured for performing a method as described above and/or below.

An aspect relates to a use of a computing device as described above and/or below and/or a method as described above and/or below for providing a verifiable logging for auditing, for a traceability to a compliance to a relevant standard - for instance to IEC 62443, NERC CIP, NIST SP 800, ISO/IEC 27002, and/or PCI DSS - and/or for forensic analysis and investigations.

For further elucidation, the disclosure is described by means of embodiments shown in the figures. These embodiments are to be considered as examples only, but not as limiting.

### Brief Description of the Drawings

The drawings depict:
- **Fig. 1**: schematically one phase of a method according to an embodiment;
- **Fig. 2**: schematically another phase of a method according to an embodiment.

### Detailed Description of Embodiments

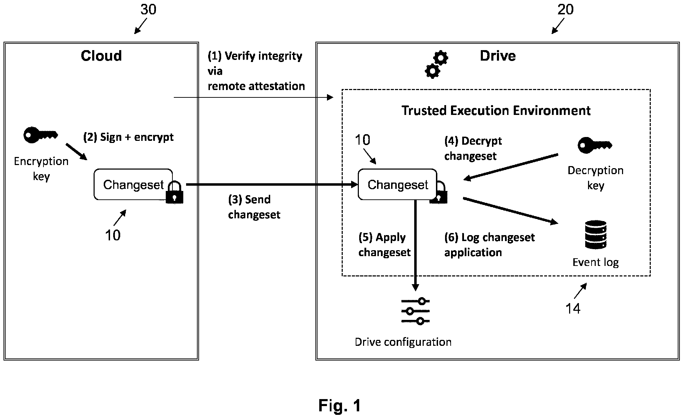

**Fig. 1** schematically shows one phase of a method according to an embodiment. In an optional step (1), an authenticity and/or an integrity of an industrial device 20 is verified by a central server 30, particularly by using means of a Trusted Execution Environment, TEE. The industrial device 20 is the target device for an application of a changeset 10, which is configured for modifying the device's 20 behaviour. In a step (2), the changeset 10 is signed and encrypted, by the central server 30. In a step (3), the encrypted changeset 10 is transmitted, by the central server 30, to the industrial device 20. In a step (4), the encrypted changeset 10 is decrypted by the industrial device 20. The decrypted changeset 10 is depicted by a padlock positioned behind the changeset 10. In a step (5), the changeset 10 is applied to the industrial device 20. In a step (6), the decrypting and the applying of the changeset 10 to the industrial device 20 is logged as an event log 14 (or in the event log 14, depending on the implementation).

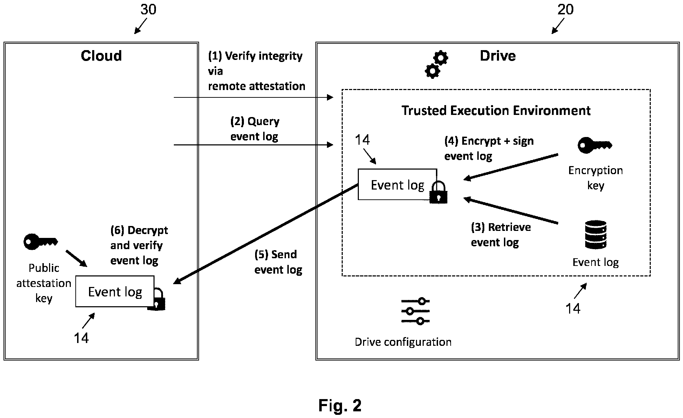

**Fig. 2** schematically shows another phase of a method according to an embodiment. In an optional step (1), an authenticity and/or an integrity of an industrial device 20 is verified by a central server 30, particularly by using means of a Trusted Execution Environment, TEE. In a step (2), the central server 30 queries the event log 14. In a step (3), the event log 14 is retrieved and, in a step (4), encrypted, by the industrial device 20. In a step (5), the encrypted event log 16 is transmitted to the central server 30. In a step (6), the encrypted event log 14 is verified by the central server 30.

## Claims

1. A method for ensuring a correct application of a changeset (10) that is configured for being applied to an industrial device (20), the method comprising the steps of:
signing and encrypting, by a central server (30), the changeset (10);
transmitting, by the central server (30), the encrypted changeset (10) to the industrial device (20);
decrypting, by the industrial device (20), the encrypted changeset (10);
applying, by the industrial device (20), the changeset (10) to the industrial device (20);
logging, by the industrial device (20), the decrypting and the applying of the changeset (10) as an event log (14);
querying, by the central server (30), the event log (14);
retrieving and encrypting, by the industrial device (20), the event log (14);
transmitting, by the industrial device (20), the encrypted event log (16) to the central server (30); and
verifying, by the central server (30), the encrypted event log (14).

2. The method of claim 1,
wherein the encrypted event log (14) is stored in a Trusted Execution Environment, TEE, of the industrial device (20), so that the encrypted event log (14) is protected by secure hardware.

3. The method of claim 1 or 2,
wherein the changeset (10) comprises data and/or instructions for modifying a behaviour and/or a performance of an industrial device (20).

4. The method of any one of the preceding claims,
wherein the applying the changeset (10) and/or the logging as the event log (14) is verifyable by a remote attestation method.

5. The method of any one of the preceding claims, further comprising the step of verifying an authenticity and/or an integrity of the industrial device (20).

6. The method of any one of the preceding claims,
wherein the event log (14) comprises at least one of: a timestamp, a sequence number, a type of the industrial device (20), a version of the industrial device (20), a source of the changeset (10), a destination of the changeset (10), an action.

7. The method of any one of the preceding claims, further comprising a changeset audit file (16),
wherein the changeset audit file (16) comprises at least one of: an event log sequence number begin, an event log sequence number end, a cryptographic algorithm, a cryptographic value.

8. A computer program product comprising instructions, which, when is executed by a computer, cause the computer and/or controller to carry out the method according to any one of the preceding claims.

9. A computer-readable storage medium on which the computer program according to claim 8 is stored.

10. A computing device configured for performing a method according to any one of the claims 1 - 7.

11. Use of a computing device according to claim 10 and/or a method according to any one of the claims 1 - 7 for providing a verifiable logging for auditing, for a traceability to a compliance to a relevant standard, and/or for forensic analysis and investigations.
